# EUROPÄISCHE PATENTSCHRIFT

(11) **EP 3 701 847 B1**
(45) Veröffentlichungstag und Bekanntmachung des Hinweises auf die Patenterteilung: **25.06.2025**
(21) Anmeldenummer: 19160306.7
(22) Anmeldetag: 01.03.2019
(51) Int. Cl.: A47J 43/07

(54) **KÜCHENMASCHINE UND VERFAHREN ZUM BETRIEB EINER KÜCHENMASCHINE**
KITCHEN APPLIANCE AND METHOD FOR OPERATING SAME
ROBOT DE CUISINE ET PROCÉDÉ DE FONCTIONNEMENT D'UN ROBOT DE CUISINE

(43) Veröffentlichungstag der Anmeldung: 02.09.2020
(73) Patentinhaber: Vorwerk & Co. Interholding GmbH, 42270 Wuppertal (DE)
(72) Erfinder: KÖNNINGS, Maximilian, CH - 8706 Meilen (CH)
(74) Vertreter: Dr. Solf & Zapf Patent- und Rechtsanwalts PartG mbB

(56) Entgegenhaltungen:
- WO-A1-2014/083029
- WO-A1-2015/162421
- DE-A1- 102013 106 865
- DE-A1- 102014 112 114

## Beschreibung

Die Erfindung betrifft eine Küchenmaschine mit mindestens einem Zubereitungsgefäß, mit mindestens einer Steuereinheit und mindestens einer internen Anzeigeeinrichtung. Das Zubereitungsgefäß weist mindestens eine Heizeinrichtung und mindestens eine Rühreinrichtung auf. Mit der Steuereinheit ist mindestens ein Benutzerprofil auswertbar, wobei die Steuereinheit basierend auf der Auswertung des mindestens einen Benutzerprofils Betriebsfunktionen zumindest aktiviert und deaktiviert, so dass die für einen Benutzer verfügbaren Betriebsfunktionen dem ausgewerteten Benutzerprofil entsprechen. Mit der internen Anzeigeeinrichtung ist ein Benutzermenü zur Bedienung bzw. Auswahl mindestens einer Betriebsfunktion durch einen Benutzer darstellbar.

Gattungsgemäße Küchenmaschinen sind im Stand der Technik in einer Vielzahl von Ausgestaltungen bekannt. Beispielsweise sind Küchenmaschinen derart ausgestaltet, dass sie dem teilautomatisierten Zubereiten von Speisen im Haushaltsbereich dienen.

DE 10 2011 053 990 A1 offenbart beispielsweise eine Küchenmaschine sowie ein Verfahren zur benutzerdefinierten Freischaltung einer Küchenmaschine. Zum Betrieb der Küchenmaschine können durch Eingabe eines Freischalt-Codes verschiedene Benutzerprofile zum Betrieb der Küchenmaschine ausgewählt werden. Der Freischalt-Code zur Freischaltung eines Benutzerprofils wird unter Nutzung sowohl des Touch-Displays als auch mindestens eines weiteren Schalters der Küchenmaschine eingegeben.

WO 2014/083 029 A1 offenbart eine Küchenmaschine mit einem beheizbaren Rührgefäß. Die Küchenmaschine weist eine Kamera sowie mindestens ein Mikrofon auf, so dass ein Benutzer und dessen Gesten erkannt sowie Sprachbefehle verarbeitet werden können.

DE 10 2014 112 114 A1 offenbart ein Küchengerät mit einer Erfassungseinheit für ein Zeit- und ein Ortsdatum. Auf Basis dieser Daten erfolgt beispielsweise eine Anpassung der verfügbaren Rezepte. Ferner ist offenbart, dass neue Rezepte sowie Updates über eine Internetverbindung des Küchengeräts bezogen werden können.

WO 2015/162 421 A1 offenbart ein Küchengerät mit Gesten oder Sprachsteuerung. Zur Erfassung der Gesten oder Sprachsignale weist das Küchengerät mindestens einen Sensor auf, der Audio-, Video-, oder Infrarotsignale aufnimmt.

DE 10 2013 106865 A1 offenbart eine elektromotorisch betriebene Küchenmaschine mit einem Rührgefäß und einem Rührwerk, wobei die Küchenmaschine benutzerspezifisch einstellbar ist, wobei ein händisch bedienbares Bedienteil vorgesehen ist. Das Bedienteil weist einen Datenspeicher und eine Datenschnittstelle zum geräteseitigen Auslesen der in dem Datenspeicher enthaltenen Daten auf, wobei mittels der Daten eine benutzerspezifische Einstellung festlegbar ist.

Die aus dem Stand der Technik bekannten Küchenmaschinen und Verfahren weisen den Nachteil auf, dass Benutzerverwaltung mit einem hohen Bedienaufwand verbunden ist.

Der vorliegenden Erfindung liegt daher die Aufgabe zugrunde, eine Küchenmaschine sowie ein Verfahren zum Betrieb einer Küchenmaschine anzugeben, bei dem der Bedienaufwand für die Benutzerverwaltung reduziert ist.

Bei einer gattungsgemäßen Küchenmaschine ist die vorgenannte Aufgabe gemäß dem Kennzeichnungsteil des Anspruchs 1 dadurch gelöst, dass das von der Steuereinheit auszuwertende Benutzerprofil anhand der Verarbeitung mindestens eines Umgebungsparameters festgelegt wird, und dass als Umgebungsparameter von der Küchenmaschine empfangbare Funksignale dienen, und dass eine Festlegung eines Benutzerprofils anhand des Kriteriums erfolgt, ob mindestens ein oder mehrere vordefinierte Funknetzwerke und/oder ein Nahbereichssender und/oder ein vordefiniertes Smartphone verfügbar ist/sind, und/oder dass das von der Steuereinheit auszuwertende Benutzerprofil durch Verarbeitung von über die, mit einem Datennetz verbindbare, Datenschnittstelle von einem Datenserver empfangenen Daten festgelegt wird.

Die erfindungsgemäße Küchenmaschine ist insbesondere zur Zubereitung von Speisen ausgebildet. Die Küchenmaschine weist mindestens ein Zubereitungsgefäß zur Aufnahme von Speisen bzw. Zutaten auf. Das Zubereitungsgefäß ist beispielsweise als Topf ausgebildet. Das Zubereitungsgefäß weist vorzugsweise eine integrierte Heizeinrichtung und eine integrierte Rühreinrichtung auf. Mit der Heizeinrichtung sind Nahrungsmittel aufheizbar. Mit der Rühreinrichtung sind Nahrungsmittel rühr- und/oder zerkleinerbar. Vorzugsweise weist die Rühreinrichtung mindestens eine Klinge auf. Die Küchenmaschine weist zudem mindestens eine Steuereinheit auf, mit der insbesondere die Betriebsfunktionen der Küchenmaschine gesteuert sowie zumindest aktiviert und deaktiviert werden können. Mit der Steuereinheit werden vorzugsweise auch Programmabläufe zur Zubereitung von Speisen, z. B. Rezepte, gesteuert. Betriebsfunktionen sind sowohl die durch den technischen Funktionsumfang der Küchenmaschine festgelegten Funktionen, z. B. Heizeinrichtung, rotierendes Werkzeug und Schnittstellen, als auch Programmabläufe zur Steuerung der Küchenmaschine, auf der Anzeigeeinrichtung darstellbare Inhalte sowie daraus kombinierte Funktionen. Die Steuereinheit ist insbesondere zur Verarbeitung von Daten eingerichtet und ausgebildet. Eine "Aktivierung" und "Deaktivierung" durch die Steuereinheit bedeutet sowohl die Aktivierung und Deaktivierung der Verfügbarkeit der Betriebsfunktion für einen Benutzer als auch - je nach Betriebsfunktion - das unmittelbare steuern, also einschalten oder ausschalten, der Betriebsfunktion.

Um festzulegen, welche Betriebsfunktionen für einen bestimmten Benutzer aktiviert bzw. deaktiviert sind, ist die Steuereinheit dazu eingerichtet und ausgebildet, mindestens ein Benutzerprofil auszuwerten und anhand des Ergebnisses der Auswertung die Küchenmaschine entsprechend einzurichten, also die Betriebsfunktionen zu aktivieren bzw. zu deaktivieren, insbesondere die Verfügbarkeit der Betriebsfunktionen für einen Benutzer zu aktivieren bzw. deaktivieren, und/oder Betriebsfunktionen unmittelbar ein- oder auszuschalten. Durch die Auswertung eines Benutzerprofils ist die Küchenmaschine für den Betrieb entsprechend der Vorgaben aus dem Benutzerprofil eingerichtet. Ein Benutzer kann die für ihn verfügbaren Betriebsfunktionen insbesondere über das Benutzermenü bedienen, also Auswählen bzw. zur Verwendung einschalten oder ausschalten.

Das Benutzerprofil, insbesondere die Eigenschaften des Benutzerprofils, legt folglich fest, wie die Küchenmaschine durch die Steuereinheit eingerichtet werden soll. Vorzugsweise ist ein Benutzerprofil eine Gruppe von, insbesondere in einem Datenspeicher abgespeicherten, Konfigurationswerten. Die Konfigurationswerte des Benutzerprofils werden von der Steuereinheit ausgelesen und zur Einrichtung der Küchenmaschine verwendet. Das Benutzerprofil ist insbesondere eine von der Steuereinheit auswertbare Konfigurationsanweisung zur Einrichtung der Küchenmaschine.

Die Einrichtung der Küchenmaschine durch die Steuereinheit erfolgt insbesondere durch eine Änderung von in einem Datenspeicher der Küchenmaschine abgelegten Konfigurationsdaten oder Konfigurationsparametern, die bei dem Betrieb der Küchenmaschine durch die Betriebsfunktionen abgefragt beziehungsweise verwendet werden. Vorteilhafterweise ist der Datenspeicher gegen unbefugte Änderungen durch Sicherungsmittel der Steuereinheit geschützt.

Erfindungsgemäß ist vorgesehen, die Auswahl, also die Festlegung des Benutzerprofils, das durch die Steuereinheit ausgewertet werden soll, dadurch zu vereinfachen, dass das auszuwertende Benutzerprofil anhand der Verarbeitung mindestens eines Umgebungsparameters, insbesondere durch die Steuereinheit, festgelegt, vorzugsweise aus einer Mehrzahl von verfügbaren Benutzerprofilen ausgewählt wird. Als Kriterium für die Auswahl des auszuwertenden Benutzerprofils und damit der Bestimmung der Betriebsfunktionen, die beispielsweise verfügbar bzw. nicht verfügbar sein sollen, dient folglich ein Umgebungsparameter, der zumindest teilweise durch die aktuelle Betriebsumgebung der Küchenmaschine beeinflusst ist.

Die Küchenmaschine ist folglich zur Erfassung mindestens eines Umgebungsparameters, insbesondere mehrerer Umgebungsparameter, eingerichtet und ausgebildet. Beispielsweise weist die Küchenmaschine zur Erfassung eines Umgebungsparameters mindestens ein Erfassungsmittel, z. B. einen Sensor, auf. Als Umgebungsparameter dienen von der Küchenmaschine empfangbare Funksignale, z. B. WLAN oder Bluetooth, die insbesondere für den Betriebsort kennzeichnend sind, und/oder weitere Signale von Sensoren, die ausgewertet werden, um daraus Rückschlüsse auf die Betriebsumgebung und damit auf den aktuellen Verwendungszweck der Küchenmaschine zu treffen. Die Festlegung des auszuwertenden Benutzerprofils und damit die Einrichtung der Küchenmaschine zum Betrieb mit dem mittels des Benutzerprofils eingeräumten Funktionsumfang erfolgt somit automatisch anhand mindestens eines Umgebungsparameters.

Alternativ dazu oder zusätzlich ist vorgesehen, dass zur Festlegung des auszuwertenden Benutzerprofils eine Verarbeitung, z. B. durch die Steuereinheit, von über mindestens eine Datenschnittstelle der Küchenmaschine empfangenen Daten herangezogen wird. Die Küchenmaschine weist insbesondere mindestens eine Datenschnittstelle, z. B. WLAN, LAN, Bluetooth, USB, oder eine Mehrzahl an Datenschnittstellen auf. Die an der Datenschnittstelle empfangenen Daten legen vorzugsweise das auszuwertende Benutzerprofil fest. Die an der mindestens einen Datenschnittstelle empfangenen Daten stammen beispielsweise von einem lokal mit der Datenschnittstelle verbundenen, insbesondere mobilen, Datenspeicher oder aus einem mit der Datenschnittstelle verbundenen Datennetz. Vorzugsweise weist die Küchenmaschine über mindestens eine Datenschnittstelle eine Verbindung zum Internet auf, so dass das auszuwertende Benutzerprofil anhand mindestens eines an der Datenschnittstelle, insbesondere aus dem Internet von mindestens einem Datenserver, empfangenen Datenelements ausgewählt wird. Die Festlegung des auszuwertenden Benutzerprofils erfolgt automatisch durch ein extern über die Datenschnittstelle zur Verfügung gestelltes Datenelement.

Ferner ist zusätzlich dazu vorgesehen, dass die Auswahl des von der Steuereinheit auszuwertenden Benutzerprofils anhand einer manuellen Auswahl im Benutzermenü festgelegt wird. Dazu ist beispielsweise vorgesehen, dass im Benutzermenü in den Systemeinstellungen aus einer Mehrzahl von verfügbaren Benutzerprofilen ausgewählt werden kann.

Es ist auch vorgesehen, dass insbesondere die vorbeschriebenen Kriterien kumulativ herangezogen werden, so dass beispielsweise sowohl ein Umgebungsparameter, als auch ein an einer Datenschnittstelle empfangenes Datenelement als Kriterien zur Festlegung des auszuwertenden Benutzerprofils herangezogen werden. Vorzugsweise ist auch vorgesehen, dass die Verfügbarkeit der manuellen Auswahl von Benutzerprofilen, insbesondere die Art und/oder der Umfang der auswählbaren Benutzerprofile, im Benutzermenü durch das aktuell aktivierte Benutzerprofil bestimmt wird und/oder anhand von Umgebungsparametern und/oder an der Datenschnittstelle empfangenen Daten festgelegt ist.

Die Erfindung weist gegenüber dem Stand der Technik den Vorteil auf, dass eine benutzer- und verwendungsspezifische Konfiguration der Küchenmaschine vereinfacht wird, insbesondere wenn die Auswahl eines Benutzerprofils und damit die Verfügbarkeit von Betriebsfunktionen automatisiert durchgeführt wird.

Eine erste Ausgestaltung der Küchenmaschine sieht vor, dass die Steuereinheit derart eingerichtet ist, dass mit an einer Datenschnittstelle empfangenen Daten mindestens ein Benutzerprofil angepasst werden kann. Die Küchenmaschine weist dazu vorzugsweise mindestens eine Datenschnittstelle auf, mit der Daten empfangbar sind. In dem Benutzerprofil werden im Rahmen der Anpassung beispielsweise die Konfigurationswerte zur Verfügbarkeit von Betriebsfunktionen und/oder die Konfigurationswerte zur Verfügbarkeit von auf der internen Anzeigeeinheit darstellbaren Inhalten und/oder andere Eigenschaften des Benutzerprofils angepasst. Ferner ist vorgesehen, dass die Steuereinheit derart eingerichtet ist, dass mit an einer Datenschnittstelle empfangenen Daten Betriebsfunktionen, insbesondere in der Steuereinheit bzw. dem Datenspeicher als Konfigurationsdaten, hinzugefügt oder entfernt werden können. Das sind beispielsweise neue Verwendungen oder neue Betriebsmodi der vorhandenen technischen Bauelemente der Küchenmaschine und/oder neue und geänderte Interaktionsmöglichkeiten über eine Datenschnittstelle etc.

Zudem ist vorgesehen, dass mittels an der Datenschnittstelle empfangenen Daten ein neues Benutzerprofil erstellt oder ein Benutzerprofil entfernt wird. Das Benutzerprofil ist insbesondere in einem nicht flüchtigen Speicher auf der Küchenmaschine gespeichert und nach entsprechender automatisierter oder manueller Auswahl von der Steuereinheit auswertbar, um die Küchenmaschine entsprechend den Vorgaben aus dem Benutzerprofil einzurichten.

Die Auswahl eines Benutzerprofils lässt sich gemäß einer weiteren Ausgestaltung insbesondere dadurch weiter vereinfachen, dass nach dem Einschalten der Küchenmaschine, insbesondere während eines Initialisierungsprozesses, mindestens ein eindeutiges Kennzeichnungsdatenelement der Küchenmaschine an der Datenschnittstelle zur Übermittlung über ein Datennetzwerk an mindestens einen Datenserver bereitgestellt wird, insbesondere diese Übermittlung an den Server erfolgt.

Das Kennzeichnungsdatenelement ist beispielsweise eine Seriennummer, eine Küchengeräte-ID oder ein anderes Datenelement, das die Küchenmaschine eindeutig kennzeichnet. Auf dem Datenserver wird anhand des Kennzeichnungsdatenelements vorzugsweise eine Auswahl bezüglich des von der Steuereinheit der Küchenmaschine auszuwertenden und damit zu aktivierenden Benutzerprofils getroffen. Diese Auswahl erfolgt beispielsweise anhand einer auf dem Datenserver hinterlegten Liste bzw. Datenbank. Beispielsweise ist das Kennzeichnungsdatenelement auf dem Datenserver in eine Benutzergruppe, z. B. Ausstellungsgerät oder Vertreter, eingeordnet und der jeweiligen Benutzergruppe ein bestimmtes Benutzerprofil zugeordnet. Auf diese Weise können eine Mehrzahl von Geräten einheitlich konfiguriert werden.

Nach der Auswahl bzw. dem Festlegen des auszuwertenden Benutzerprofils wird mindestens ein Datenelement, das die auf dem Datenserver getroffene Auswahl repräsentiert, über das Datennetzwerk an die Datenschnittstelle der Küchenmaschine gesendet bzw. an der Datenschnittstelle als Daten zur Verfügung gestellt. Die Steuereinheit führt die Auswertung des Benutzerprofils durch und richtet die Küchenmaschine entsprechend ein.

Diese Ausgestaltung hat insbesondere den Vorteil, dass das zu analysierende Benutzerprofil, insbesondere die Zuordnung zu einer Benutzergruppe, geändert werden kann, so dass in Abhängigkeit von dem Kennzeichnungselement flexibel ein Wechsel des auszuwertenden Benutzerprofils festgelegt werden kann.

Bei der Auswertung von Umgebungsparametern zur Festlegung eines auszuwertenden Benutzerprofils hat sich gemäß einer weiteren Ausgestaltung als vorteilhaft herausgestellt, wenn vorgesehen ist, dass als Umgebungsparameter mindestens ein von mindestens einer Datenschnittstelle empfangenes Signal eines elektronischen Gerätes ausgewertet wird. Beispielsweise ist dazu vorgesehen, dass die Verfügbarkeit mindestens eines Funknetzwerkes, beispielsweise eines WLAN-Netzwerks, erkannt wird. Erfindungsgemäß erfolgt eine Festlegung eines Benutzerprofils anhand des Kriteriums, ob mindestens ein oder mehrere vordefinierte Funknetzwerke verfügbar sind. Vorzugsweise wird dazu eine Netzwerk-Identifizierung, insbesondere der Service Set Identifier (SSID) und/oder eine MAC-Adresse (Media-Access-Control-Adresse), von mindestens einem Netzwerkgerät ausgewertet. Es ist beispielsweise vorgesehen, dass die Festlegung des Benutzerprofils auch erfolgt, wenn sich die Küchenmaschine selbst nicht in dem Netzwerk identifiziert, also mit diesem Netzwerk verbindet. Die bloße Verfügbarkeit des Netzwerks als Kriterium genügt.

Ebenfalls ist vorgesehen, dass die Steuereinheit derart eingerichtet und ausgebildet ist, dass die vordefinierten Funknetzwerke oder das vordefinierte Funknetzwerk, insbesondere eine Liste von vorbestimmten Funknetzwerken, über an der Datenschnittstelle zur Verfügung gestellten Daten anpassbar ist.

Es ist auch vorteilhafterweise vorgesehen, dass die Küchenmaschine mindestens eine optische Erfassungseinrichtung, z. B. eine Kamera, aufweist, und dass als Umgebungsparameter ein mit der optischen Erfassungseinrichtung erfasstes Bild, insbesondere ein erfasstes Gesicht eines Benutzers, analysiert und zur Festlegung des auszuwertenden Benutzerprofils herangezogen wird.

Alternativ dazu oder zusätzlich ist vorgesehen, dass die Anwesenheit eines vordefinierten Smartphones ausgewertet wird. Beispielsweise ist in einem Speicher der Küchenmaschine eine Liste von identifizierbaren Smartphones gespeichert, oder die Liste ist auf einem Datenserver gespeichert, auf den die Steuereinheit über ein Datennetzwerk zugreifen kann. Das Smartphone ist beispielsweise über eine WLAN- oder Bluetooth-Verbindung mit dem Küchengerät verbunden oder sendet zumindest WLAN- oder Bluetooth-Signale aus, über die die Küchenmaschine, insbesondere die Steuereinheit der Küchenmaschine, auf die Anwesenheit des Smartphones schließen kann. Wird die Anwesenheit des Smartphones erkannt, wird dadurch ein vorbestimmtes Benutzerprofil, beispielsweise ein Benutzerprofil, das für Präsentationszwecke vorgesehen ist, aktiviert.

Alternativ dazu oder zusätzlich ist vorgesehen, dass als Umgebungsparameter ein Nahbereichssender, insbesondere Bluetooth-Sender, und/oder geografische Positionsdaten und/oder Wetterdaten, beispielsweise Luftdruck, und/oder akustische Daten, beispielsweise Umgebungsgeräusche, ausgewertet werden. Es ist vorgesehen, dass beispielsweise das Vorhandensein eines Bluetooth-Senders, beispielsweise ein sogenannter Bluetooth-Beacon, erkannt wird. Ein derartiger Bluetooth-Sender ist beispielsweise in einem Verkaufsraum installiert, so dass die Küchenmaschine erkennt, dass sie in einem Verkaufsraum angeordnet ist und anhand dieses Umgebungsparameters automatisch ein Benutzerprofil ausgewertet wird.

Ferner ist vorgesehen, dass geografische Positionsdaten, beispielsweise einer vorhandenen GPS-Antenne, oder Positionsdaten, die aus der Empfangsstärke einer Mehrzahl von Funksendern gewonnen werden können, für die Auswahl des auszuwertenden Benutzerprofils herangezogen werden. Zudem ist vorgesehen, dass Wetterdaten, beispielsweise der Umgebungsluftdruck, ausgewertet werden, um insbesondere Rückschlüsse darauf zu ziehen, ob sich die Küchenmaschine in geschlossenen Räumen oder im Freien befindet. Vorzugsweise wird dieser Umgebungsparameter zur Festlegung des Benutzerprofils mit der Auswertung anderer Umgebungsparameter kombiniert.

Zudem ist vorgesehen, dass akustische Daten ausgewertet werden, beispielsweise Umgebungsgeräusche. Die Küchenmaschine weist dazu mindestens einen akustischen Sensor, insbesondere ein Mikrophon, auf. Wenn zum Beispiel über mindestens den Sensor eine Vielzahl von menschlichen Stimmen als Umgebungsgeräusche erkennbar ist, kann dies als Kriterium dafür herangezogen werden, dass sich die Küchenmaschine beispielsweise in einem Verkaufsraum oder auf einer Messe befindet, wodurch ein spezielles Benutzerprofil von der Steuereinheit ausgewertet wird. Vorzugsweise wird dieser akustische Umgebungsparameter zur Festlegung des Benutzerprofils mit der Auswertung anderer Umgebungsparameter kombiniert.

Vorzugsweise wird der Umgebungsparameter nach dem Einschalten der Küchenmaschine, insbesondere während eines Initialisierungsprozesses, erkannt und ausgewertet.

Insbesondere bei der Verwendung der Küchenmaschine als Ausstellungsgerät hat es sich gemäß einer weiteren Ausgestaltung als vorteilhaft herausgestellt, wenn vorgesehen ist, dass die Steuereinheit durch Auswertung eines Benutzerprofils die Küchenmaschine derart einrichtet, dass eine zeitgesteuerte und/oder programmgesteuerte Abschaltung der Anzeigeeinrichtung deaktiviert ist. Üblicherweise ist vorgesehen, dass sich die Anzeigeeinheit bei Nichtbenutzung der Küchenmaschine nach Ablauf eines vorgegebenen Zeitraums der Nichtbenutzung oder durch einen Programmablauf automatisch abschaltet. Es ist gemäß der Erfindung vorgesehen, dass diese automatische Abschaltung der Anzeigeeinheit durch die Steuereinheit deaktivierbar ist bzw. deaktiviert ist.

Vorzugsweise wird der Zugriff auf externe Daten und Inhalte, zum Beispiel Rezepte, mittels der Küchenmaschine dadurch vereinfacht, dass gemäß einer weiteren Ausgestaltung vorgesehen ist, dass die Steuereinheit durch Auswertung eines Benutzerprofils die Küchenmaschine derart einrichtet, dass eine Bereitstellung von Identifizierungsinformationen an der Datenschnittstelle zur Übermittlung an mindestens einen Datenserver erfolgt, wodurch eine automatische Identifizierung der Küchenmaschine an einem Datenserver erfolgen kann. Durch Auswertung eines speziellen Benutzerprofils richtet die Steuereinheit die Küchenmaschine folglich derart ein, dass Identifizierungsinformationen an der Datenschnittstelle zur Verfügung gestellt werden, mit denen der Zugriff auf bestimmte Inhalte und Daten auf einem Datenserver möglich ist. Für einzelne Benutzerprofile kann daher eine Identifizierung durch den Benutzer an dem Datenserver entfallen, da sich die Küchenmaschine bereits automatisch identifiziert und die Inhalte, z. B. Rezepte zur Steuerung von Programmabläufen auf der Küchenmaschine, freigeschaltet hat.

Vorzugsweise, um einer Mehrzahl an Zuschauern die Funktionsweise der Küchenmaschine gleichzeitig präsentieren zu können, ist gemäß einer weiteren Ausgestaltung der Küchenmaschine vorgesehen, dass die Steuereinheit durch Auswertung eines Benutzerprofils die Küchenmaschine derart einrichtet, dass Anzeigeinformationen, die an der internen Anzeigeeinrichtung dargestellt werden, auch an mindestens einer Datenschnittstelle zur Anzeige an einer externen Anzeigeeinrichtung bereitgestellt werden. An der internen Anzeigeeinrichtung werden beispielsweise das Benutzermenü oder andere Informationen, zum Beispiel Videos und Zeichnungen, dargestellt. Die Steuereinheit richtet nun die Küchenmaschine derart ein, dass diese Anzeigeinformationen über die Datenschnittstelle, beispielsweise eine Funkschnittstelle, insbesondere WLAN-Schnittstelle, zur Verfügung gestellt werden, um diese an einer externen Anzeigeeinrichtung, beispielsweise auf einem Beamer oder einem großen Monitor, anzuzeigen. Vorzugsweise richtet die Steuereinheit die Küchenmaschine derart ein, dass die Anzeige der internen Anzeigeeinrichtung auf eine externe Anzeigeeinrichtung spiegelbar ist.

Ferner ist gemäß einer weiteren Ausgestaltung vorgesehen, dass die auf der externen Anzeigeeinrichtung angezeigten Anzeigeinformationen mit grafischen Zusatzinformationen basierend auf einem aktuellen Zustand der Küchenmaschine, dem Bedienungsverhalten und/oder Benutzereingaben ergänzt oder um Minderinformationen reduziert werden. Diese Zusatzinformationen werden vorzugsweise abhängig von einem Betriebszustand der Küchenmaschine, dem Nutzerverhalten, insbesondere durch Eingabe von Bedienbefehlen, ergänzt. Dabei handelt es sich beispielsweise um eine grafische Hervorhebung von ausgewählten Inhalten bzw. Funktionen oder die Entfernung von ausgewählten Inhalten.

Vorzugsweise ist gemäß einer weiteren Ausgestaltung vorgesehen, dass das Ergänzen der grafischen Zusatzinformationen oder das Entfernen der grafischen Minderinformationen für die Anzeige an der externen Anzeigeeinrichtung durch Berühren der internen Anzeigeeinrichtung durch einen Benutzer ausgelöst wird. Das Berühren der internen Anzeigeeinrichtung, die insbesondere als Touch-Display ausgebildet ist, verursacht folglich das Ergänzen von grafischen Zusatzinformationen oder Entfernen von grafischen Minderinformationen in der Darstellung der externen Anzeigeeinrichtung. Beispielsweise entspricht die Position der Zusatzinformation auf der externen Anzeigeeinrichtung skaliert der Position der Berührung der internen Anzeigeeinrichtung. Wenn beispielsweise der Benutzer die interne Anzeigeeinrichtung rechts unten berührt, wird die grafische Zusatzinformation ebenfalls auf der externen Anzeigeeinrichtung rechts unten dargestellt. Insbesondere korrespondiert die grafische Zusatzinformation zu einem von dem Benutzer berührten grafischen Objekt auf der internen Anzeigeeinrichtung.

Eine weitere Ausgestaltung der Küchenmaschine sieht vor, dass Mittel zur Spracherkennung vorgesehen sind, insbesondere dass die Steuereinheit zur Auswertung eines Benutzerprofils die Küchenmaschine derart einrichtet, dass Anzeigeinformationen, die zur Anzeige an einer externen Anzeigeeinrichtung bereitgestellt werden, mit grafischen Zusatzinformationen ergänzt werden oder um grafische Minderinformationen reduziert werden, und dass das Ergänzen der grafischen Zusatzinformationen oder Reduzierung um Minderinformationen durch im Rahmen von einer durchgeführten Spracherkennung erkannten Schlüsselwörtern ausgelöst wird.

Die Spracherkennung wird folglich mit dem Mittel zur Spracherkennung durchgeführt und die in der Umgebung der Küchenmaschine erfassten Geräusche auf Schlüsselwörter analysiert. Die Spracherkennung erfolgt beispielsweise lokal in der Steuereinheit der Küchenmaschine oder extern auf einem Datenserver. Wird beispielsweise ein Schlüsselwort erkannt, wird auf Basis dieses Schlüsselwortes eine oder mehrere dem Schlüsselwort zugewiesene Zusatzinformationen in die für die Anzeige an einer externen Anzeigeeinrichtung bereitgestellten Anzeigeinformationen ergänzt oder vorbestimmte Minderinformationen aus den Anzeigeinformationen entfernt. So können beispielsweise Inhalte der Anzeigeinformationen mit Bezug zu dem genannten Schlüsselwort hervorgehoben und/oder beispielsweise andere Inhalte ausgegraut oder entfernt werden.

Vorzugsweise zur Erläuterung von Eingaben auf einem Tablet oder einem Smartphone, beispielsweise im Rahmen der Auswahl eines Rezeptes, ist gemäß einer weiteren Ausgestaltung der Küchenmaschine vorgesehen, dass die Steuereinheit durch Auswertung eines Benutzerprofils die Küchenmaschine derart einrichtet, dass über die Datenschnittstelle externe Anzeigeinformationen empfangbar und auf der internen Anzeigeeinrichtung darstellbar sind. So können beispielsweise über die Datenschnittstelle Anzeigeinformationen, beispielsweise vom Display eines Smartphones oder eines Tablets, empfangen und auf der internen Anzeigeeinrichtung der Küchenmaschine dargestellt werden. Auf diese Weise kann beispielsweise im Rahmen eines Kochkurses die Auswahl eines Rezeptes oder ähnliches durch Eingabe an einem Tablet durchgeführt werden, während jeder Teilnehmer an einem Küchengerät die Eingabe nachvollziehen kann.

Des Weiteren ist vorgesehen, dass die externen Anzeigeinformationen beispielsweise über die Datenschnittstelle, insbesondere aus einem Datennetz, z. B. dem Internet, empfangene Videodaten oder ein Video-Livestream sind. Auf diese Weise kann der Benutzer der Küchenmaschine einer Produktpräsentation oder einer Kochveranstaltung folgen.

Eine weitere Ausgestaltung, die insbesondere für die Verwendung in Kochkursen vorteilhaft ist, sieht vor, dass die Steuereinheit durch Auswertung eines Benutzerprofils die Küchenmaschine derart einrichtet, dass über die Datenschnittstelle externe Anzeigeinformationen empfangbar sind und an der Datenschnittstelle zur Anzeige an einer externen Anzeigeeinrichtung bereitgestellt werden. Auf diese Weise kann beispielsweise über die Datenschnittstelle der Anzeigeinhalt, also die Anzeigeinformation eines Tablets oder Smartphones, von der Küchenmaschine empfangen und ebenfalls wieder an der Datenschnittstelle zur Anzeige an einer externen Anzeigeeinrichtung zur Verfügung gestellt werden.

Durch diese Ausgestaltung muss der Präsentierende bei einer Produktpräsentation nicht zwischen verschiedenen Anzeigequellen umschalten, sondern kann reibungslos Anzeigeinhalte von verschiedenen Geräten, insbesondere der Küchenmaschine und eines Smartphones oder Tablets, darstellen.

Insbesondere für Verkaufs- und Produktpräsentationen hat sich gemäß einer weiteren Ausgestaltung als bevorzugt herausgestellt, wenn vorgesehen ist, dass die Steuereinheit durch Auswertung eines Benutzerprofils die Küchenmaschine derart einrichtet, dass der Empfang und/oder das Versenden von Hinweisen und/oder Nachrichten, insbesondere E-Mails oder SMS, über die Datenschnittstelle ermöglicht ist. Dabei ist vorgesehen, dass beispielsweise ein Vertreter bei einer Produktpräsentation nach dem Einschalten des Gerätes tagesaktuelle Informationen, also Hinweise, neu verfügbare Rezepte oder sonstige neu verfügbare Informationen, auf der Anzeigeeinrichtung der Küchenmaschine angezeigt bekommt. Das dazu ausgewertete Benutzerprofil entspricht folglich dann dem Benutzerprofil eines Vertreters.

Bei diesem Ausführungsbeispiel ist mittels der Küchenmaschine eine zentralisierte Kommunikation und ein zentralisierter Informationsaustausch für die Produktpräsentation oder andere Informationen möglich. Vorzugsweise ist es auch möglich, ausgehend von der Küchenmaschine, Hinweise, Informationen oder Nachrichten zu versenden, insbesondere um mit dem Benutzer einer weiteren Küchenmaschine zu interagieren.

Eine weitere Ausgestaltung der erfindungsgemäßen Küchenmaschine sieht vor, dass die Steuereinheit durch Auswertung eines Benutzerprofils die Küchenmaschine derart einrichtet, dass der Zugriff für einen Benutzer auf in der Küchenmaschine gespeicherte und/oder über die Datenschnittstelle von einem Datenserver abrufbare und auf der internen Anzeigeeinrichtung darstellbaren Informationen, insbesondere ein Produktkatalog, Produktvideos und/oder Nachrichten, aktiviert ist.

Insbesondere wird beispielsweise das auf der internen Anzeigeeinrichtung dargestellte Benutzermenü entsprechend geändert, um einen Zugriff auf die aktivierten Informationen zu ermöglichen.

Die eingangs genannte Aufgabe ist ferner mit einem Verfahren zum Betrieb einer Küchenmaschine mit mindestens einer Steuereinheit und mindestens einer Anzeigeeinrichtung gelöst. Die Küchenmaschine ist vorzugsweise gemäß einem der vorstehenden Ausführungsbeispiele ausgebildet. Das Verfahren sieht vor, dass das von der Steuereinheit auszuwertende Benutzerprofil anhand der Verarbeitung von über mindestens eine Datenschnittstelle empfangenen Daten festgelegt wird.

Gemäß dem Verfahren wird nach dem Einschalten der Küchenmaschine mindestens ein eindeutiges Kennzeichnungsdatenelement der Küchenmaschine an der Datenschnittstelle über ein Datennetzwerk an mindestens einen Datenserver übermittelt. Der Datenserver ist derart eingerichtet, dass anhand des Kennzeichnungsdatenelementes eine Auswahl eines auszuwertenden Benutzerprofils aus einer Mehrzahl von Benutzerprofilen auf dem Datenserver erfolgt. Insbesondere erfolgt die Auswahl durch Zuordnung des Kennzeichnungsdatenelementes und damit der Küchenmaschine zu einer Benutzergruppe. Für die Benutzergruppe ist ein Benutzerprofil definiert. Anschließend übermittelt der Datenserver über das Datennetz an die Datenschnittstelle entsprechende Auswahldaten zur Veranlassung der Auswertung des ausgewählten Benutzerprofils durch die Steuereinheit.

Ferner ist vorgesehen, dass der Datenserver und/oder mindestens ein weiterer Datenserver nach der Festlegung des Benutzerprofils weitere Daten über die Datenschnittstelle an die Küchenmaschine sendet, insbesondere Daten die das Benutzerprofil ergänzen, anpassen oder Informationen für einen Benutzer enthalten. Weitere vorteilhafte Ausgestaltungen der Erfindung ergeben sich aus der folgenden Figurenbeschreibung und den abhängigen Unteransprüchen. Es zeigen:
- Fig. 1: ein Ausführungsbeispiel einer Küchenmaschine in perspektivischer Seitenansicht,
- Fig. 2: ein Schema zur Festlegung des auszuwertenden Benutzerprofils, und
- Fig. 3: einen schematischen Ablauf des erfindungsgemäßen Verfahrens.

In den verschiedenen Figuren der Zeichnung sind gleiche Teile stets mit denselben Bezugszeichen versehen.

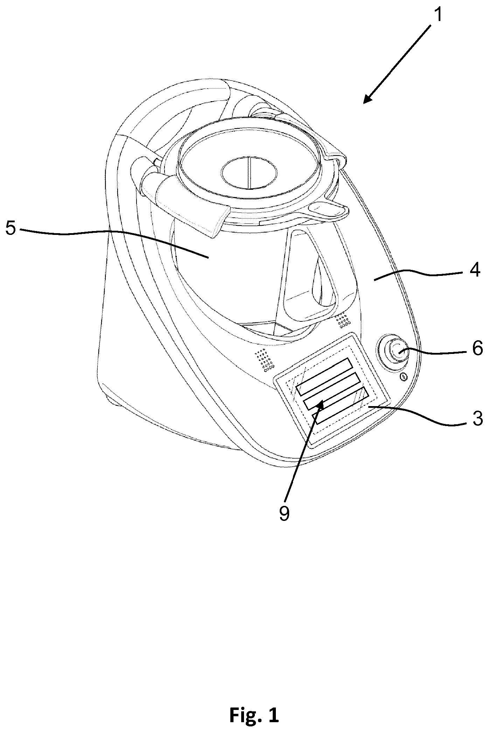

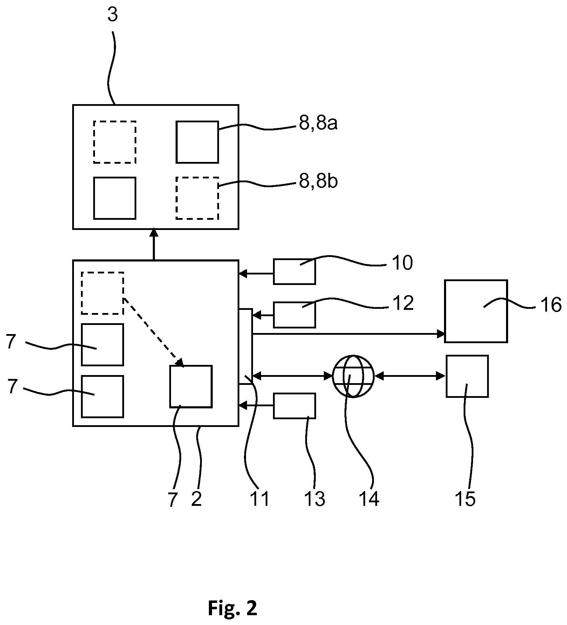

Fig. 1 zeigt ein Ausführungsbeispiel einer Küchenmaschine 1 mit einer schematisch in Fig. 2 dargestellten Steuereinheit 2. Ferner weist die Küchenmaschine 1 gemäß Fig. 1 eine interne Anzeigeeinrichtung 3 auf. Die Küchenmaschine 1 ist zur Zubereitung von Speisen ausgebildet und weist ein Gehäuse 4 und einen Zubereitungstopf 5 auf, in dem Speisen zerkleinert, gerührt und warmgehalten werden können. Der Zubereitungstopf 5 ist zumindest teilweise in dem Gehäuse 4 aufnehmbar. Die Anzeigeeinrichtung 3 ist vorzugsweise als Touch-Display ausgebildet. Zur Steuerung der Küchenmaschine 1 ist ferner ein Bedienelement 6 in Form eines Drehreglers vorgesehen, mit dem auch Schalt- und Bestätigungseingaben möglich sind.

Gemäß Fig. 2 ist mit der Steuereinheit 2 mindestens ein Benutzerprofil 7 aus einer Mehrzahl von Benutzerprofilen festlegbar, um das Benutzerprofil 7 nach der Festlegung auszuwerten. Basierend auf der Auswertung eines Benutzerprofils 7 sind Betriebsfunktionen 8a, 8b aktivierbar und deaktivierbar, so dass die Betriebsfunktionen 8a, 8b für einen Benutzer verfügbar bzw. nicht verfügbar sind. Die Betriebsfunktionen 8a sind verfügbar, die Betriebsfunktionen 8b sind nicht verfügbar. Gemäß Fig. 1 sind insbesondere die verfügbaren Betriebsfunktionen 8a mit der internen Anzeigeeinrichtung 3 als ein Benutzermenü 9 darstellbar. Nicht verfügbare Betriebsfunktionen 8b werden insbesondere an der internen Anzeigeeinrichtung 3 nicht angezeigt.

Die Auswahl mindestens eines von der Steuereinheit 2 auszuwertenden Benutzerprofils 7 erfolgt gemäß Fig. 2 anhand der Verarbeitung mindestens eines Umgebungsparameters 10 und/oder durch Verarbeitung von über mindestens eine Datenschnittstelle 11 empfangenen Daten 12 und/oder durch manuelle Auswahl 13 in dem Benutzermenü 9.

Die an der Datenschnittstelle 11 empfangenen Daten 12 stammen vorzugsweise von einem lokalen oder entfernten Datenspeicher, beispielsweise von einem Datenserver 15.

Die Steuereinheit 2 ist ferner derart eingerichtet, dass mit an der Datenschnittstelle 11 empfangenen Daten 12 mindestens ein Benutzerprofil 7 angepasst und/oder ein neues Benutzerprofil 7 erstellt werden kann. Zur Erstellung eines neuen Benutzerprofils 7 können die erforderlichen Daten von der Steuereinheit 2 an der Datenschnittstelle 11 beispielsweise von dem Datenserver 15 über ein Datennetz 14, z. B. das Internet, angefordert werden.

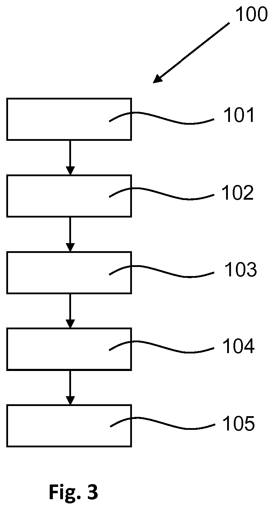

Die Küchenmaschine 1 ist durch Auswertung eines Benutzerprofils mit der Steuereinheit 2 derart einrichtbar, dass Anzeigeinformationen die für die Darstellung an der internen Anzeigeeinheit 3 vorgesehen sind, an der Datenschnittstelle 11 für die Darstellung an einer externen Anzeigeeinheit 16 zur Verfügung gestellt werden. Fig. 3 zeigt ein Verfahren 100 zum Betrieb einer Küchenmaschine 1 gemäß Fig. 1.

Nach dem Einschalten 101 der Küchenmaschine 1 erfolgt ein Übermitteln 102 eines Kennzeichnungsdatenelements der Küchenmaschine 1 - siehe Fig. 1 - über die Datenschnittstelle 11 - siehe Fig. 2 - und ein Datennetzwerk 14 an mindestens einen Datenserver 15. Der Datenserver 15 ist derart eingerichtet und ausgebildet, dass anhand des Kennzeichnungsdatenelementes eine Auswahl 103 eines auszuwertenden Benutzerprofils 7 aus einer Mehrzahl von Benutzerprofilen 7 erfolgt, die insbesondere auf dem Datenserver 15 hinterlegt sind. Vorzugsweise erfolgt die Zuordnung des Kennzeichnungsdatenelements zu einer Benutzergruppe. Der Benutzergruppe ist wiederum mindestens ein Benutzerprofil 7 zugeordnet.

Nach der Festlegung des Benutzerprofils 7 erfolgt ein Bereitstellen 104 zumindest von Auswahldaten durch den Datenserver 15. Die Bereitstellung 104 erfolgt über das Datennetz 14 und die Datenschnittstelle 11, so dass eine Auswertung des ausgewählten Benutzerprofils 7 durch die Steuereinheit 2 erfolgt und die Küchenmaschine 1 eingerichtet 105 wird.

### Bezugszeichenliste

- 1: Küchenmaschine
- 2: Steuereinheit
- 3: Interne Anzeigeeinrichtung
- 4: Gehäuse
- 5: Zubereitungstop
- 6: Bedienelement
- 7: Benutzerprofil
- 8: Betriebsfunktionen
- 8a: Verfügbare Betriebsfunktionen
- 8b: Nicht verfügbare Betriebsfunktionen
- 9: Benutzermenü
- 10: Umgebungsparameter
- 11: Datenschnittstelle
- 12: Empfangene Daten
- 13: Manuelle Auswahl
- 14: Datennetz
- 15: Datenserver
- 16: Externe Anzeigeeinrichtung

- 100: Verfahren
- 101: Einschalten
- 102: Übermitteln
- 103: Auswählen
- 104: Bereitstellen
- 105: Einrichten der Küchenmaschine

## Patentansprüche

1. Küchenmaschine (1) mit mindestens einem Zubereitungsgefäß, mit mindestens einer Steuereinheit (2), mindestens einer internen Anzeigeeinrichtung (3) und mindestens einer Datenschnittstelle (11), wobei das Zubereitungsgefäß mindestens eine Heizeinrichtung und mindestens eine Rühreinrichtung aufweist, wobei mit der Steuereinheit (2) mindestens ein Benutzerprofil (7) auswertbar ist, wobei die Steuereinheit (2) basierend auf der Auswertung des Benutzerprofils (7) Betriebsfunktionen (8) zumindest aktiviert und deaktiviert, so dass die für einen Benutzer verfügbaren Betriebsfunktionen (8,8a) dem ausgewerteten Benutzerprofil (7) entsprechen, und wobei mit der internen Anzeigeeinrichtung (3) ein Benutzermenü (9) zur Bedienung mindestens einer Betriebsfunktion (8) durch einen Benutzer darstellbar ist,
**dadurch gekennzeichnet, dass**
das von der Steuereinheit (2) auszuwertende Benutzerprofil (7) anhand der Verarbeitung mindestens eines Umgebungsparameters (10) festgelegt wird, dass als Umgebungsparameter (10) von der Küchenmaschine empfangbare Funksignale dienen, und dass eine Festlegung eines Benutzerprofils anhand des Kriteriums erfolgt, ob mindestens ein oder mehrere vordefinierte Funknetzwerke und/oder ein Nahbereichssender und/oder ein vordefiniertes Smartphone verfügbar ist/sind, und/oder dass das von der Steuereinheit (2) auszuwertende Benutzerprofil (7) durch Verarbeitung von über die, mit einem Datennetz verbindbare, Datenschnittstelle (11) von einem Datenserver empfangenen Daten (12) festgelegt wird.

2. Küchenmaschine (1) nach Anspruch 1,
**dadurch gekennzeichnet, dass**
die Steuereinheit (2) derart eingerichtet ist, dass mit an der Datenschnittstelle (11) empfangenen Daten (12) ein Benutzerprofil (7) angepasst und/oder ein neues Benutzerprofil (7) erstellt werden kann.

3. Küchenmaschine (1) nach Anspruch 1 oder 2,
**dadurch gekennzeichnet, dass**
nach dem Einschalten (101) mindestens ein eindeutiges Kennzeichnungsdatenelement der Küchenmaschine (1) an der Datenschnittstelle (11) zur Übermittlung über ein Datennetzwerk (14) an mindestens einen Datenserver (15) bereitgestellt wird.

4. Küchenmaschine (1) nach einem der Ansprüche 1 bis 3,
**dadurch gekennzeichnet, dass**
das von der Steuereinheit (2) auszuwertende Benutzerprofil (7) anhand der Verarbeitung mindestens eines Umgebungsparameters (10) festgelegt wird, dass als Umgebungsparameter (10) von der Küchenmaschine empfangbare Funksignale dienen, und dass als Umgebungsparameter (10) mindestens ein von der Datenschnittstelle (11) empfangenes Funksignal eines elektronischen Geräts, beispielsweise mindestens ein verfügbares Funknetzwerk und/oder die Anwesenheit eines vordefinierten Smartphones und/oder ein Nahbereichssender ausgewertet wird/werden.

5. Küchenmaschine (1) nach Anspruch 4,
**dadurch gekennzeichnet, dass**
als Umgebungsparameter zusätzlich geographische Positionsdaten, beispielsweise Luftdruck, und/oder akustische Daten, beispielsweise Umgebungsgeräusche, ausgewertet werden.

6. Küchenmaschine (1) nach einem der Ansprüche 1 bis 5,
**dadurch gekennzeichnet, dass**
die Steuereinheit (2) durch Auswertung eines Benutzerprofils (7) die Küchenmaschine (1) derart einrichtet, dass eine zeitgesteuerte und/oder programmgesteuerte Abschaltung der internen Anzeigeeinrichtung (3) deaktiviert ist.

7. Küchenmaschine (1) nach einem der Ansprüche 1 bis 6,
**dadurch gekennzeichnet, dass**
die Steuereinheit (2) durch Auswertung eines Benutzerprofils (7) die Küchenmaschine (1) derart einrichtet, dass eine Bereitstellung von Identifizierungsinformationen an der Datenschnittstelle (11) zur Übermittlung an mindestens einen Datenserver (15) erfolgt, so dass eine Identifizierung der Küchenmaschine (1) an einem Datenserver (15) erfolgen kann.

8. Küchenmaschine (1) nach einem der Ansprüche 1 bis 7,
**dadurch gekennzeichnet, dass**
die Steuereinheit (2) durch Auswertung eines Benutzerprofils (7) die Küchenmaschine (1) derart einrichtet, dass Anzeigeinformationen, die an der internen Anzeigeeinrichtung (3) dargestellt werden, auch an der Datenschnittstelle (11) zur Anzeige an einer externen Anzeigeeinrichtung (16) bereitgestellt werden.

9. Küchenmaschine (1) nach Anspruch 8,
**dadurch gekennzeichnet, dass**
die Steuereinheit (2) durch Auswertung eines Benutzerprofils (7) die Küchenmaschine (1) derart einrichtet, dass die Anzeigeinformationen die zur Anzeige an einer externen Anzeigeeinrichtung (16) bereitgestellt werden, mit grafischen Zusatzinformationen basierend auf einem aktuellen Zustand der Küchenmaschine (1), dem Bedienungsverhalten und/oder Nutzereingaben ergänzt oder um grafische Minderinformationen reduziert werden.

10. Küchenmaschine (1) nach Anspruch 9,
**dadurch gekennzeichnet, dass**
das Ergänzen der grafischen Zusatzinformationen oder das Entfernen der grafischen Minderinformationen durch Berühren der internen Anzeigeeinrichtung (3) durch einen Benutzer ausgelöst wird, insbesondere dass die Position der Zusatzinformation durch die Position der Berührung der internen Anzeigeeinrichtung (3) festgelegt wird.

11. Küchenmaschine (1) nach einem der Ansprüche 1 bis 10,
**dadurch gekennzeichnet, dass**
Mittel zur Spracherkennung vorgesehen sind, insbesondere dass die Steuereinheit (2) durch Auswertung eines Benutzerprofils (7) die Küchenmaschine (1) derart einrichtet, dass die Anzeigeinformationen die zur Anzeige an einer externen Anzeigeeinrichtung (16) bereitgestellt werden, mit grafischen Zusatzinformationen ergänzt oder um grafische Minderinformationen reduziert werden, und dass das Ergänzen der grafischen Zusatzinformationen oder Reduzieren um grafische Minderinformationen durch im Rahmen von einer durchgeführten Spracherkennung erkannte Schlüsselwörter ausgelöst wird.

12. Küchenmaschine (1) einem der Ansprüche 1 bis 11,
**dadurch gekennzeichnet, dass**
die Steuereinheit (2) durch Auswertung eines Benutzerprofils (7) die Küchenmaschine (1) derart einrichtet, dass über die Datenschnittstelle (11) externe Anzeigeinformationen empfangbar und auf der internen Anzeigeeinrichtung (3) darstellbar sind.

13. Küchenmaschine (1) nach einem der Ansprüche 1 bis 12,
**dadurch gekennzeichnet, dass**
die Steuereinheit (2) durch Auswertung eines Benutzerprofils (7) die Küchenmaschine (1) derart einrichtet, dass über die Datenschnittstelle (11) externe Anzeigeinformationen empfangbar sind und die externen Anzeigeinformationen wieder an der Datenschnittstelle (11) zur Anzeige an einer externen Anzeigeeinrichtung (16) bereitgestellt werden und/oder dass die Steuereinheit (2) durch Auswertung eines Benutzerprofils (7) die Küchenmaschine (1) derart einrichtet, dass der Empfang und/oder das Versenden von Hinweisen und/oder Nachrichten, insbesondere E-Mail oder SMS, über die Datenschnittstelle (11) eingerichtet ist.

14. Küchenmaschine (1) nach einem der Ansprüche 1 bis 13,
**dadurch gekennzeichnet, dass**
die Steuereinheit (2) durch Auswertung eines Benutzerprofils (7) die Küchenmaschine (1) derart einrichtet, dass die Anzeige von auf in der Küchenmaschine (1) gespeicherten oder über die Datenschnittstelle (11) von einem Datenserver (15) abrufbaren und auf der internen Anzeigeeinrichtung (3) darstellbarer Informationen, insbesondere ein Produktkatalog, Produktvideos und/oder Nachrichten, aktiviert ist.

15. Verfahren (100) zum Betrieb einer Küchenmaschine (1) mit mindestens einer Steuereinheit (2) und mindestens einer internen Anzeigeeinrichtung (3), wobei mit der Steuereinheit (2) mindestens ein Benutzerprofil (7) zumindest zur Aktivierung und zur Deaktivierung von Betriebsfunktionen (8) auswertbar ist, und wobei mit der internen Anzeigeeinrichtung (3) ein Benutzermenü (9) zur Bedienung mindestens einer Betriebsfunktion (8) durch einen Benutzer darstellbar ist, insbesondere nach einem der Ansprüche 1 bis 14,
**dadurch gekennzeichnet, dass**
das von der Steuereinheit (2) auszuwertende Benutzerprofil (7) durch Verarbeitung von über mindestens eine Datenschnittstelle (11) empfangenen Daten festgelegt wird, dass nach dem Einschalten (101) der Küchenmaschine (1) mindestens ein eindeutiges Kennzeichnungsdatenelement der Küchenmaschine (1) über die Datenschnittstelle (11) und ein Datennetzwerk (14) an mindestens einen Datenserver (15) übermittelt (102) wird, dass der Datenserver (15) derart eingerichtet ist, dass anhand des Kennzeichnungsdatenelementes eine Auswahl (103) eines auszuwertenden Benutzerprofils (7) aus einer Mehrzahl von Benutzerprofilen (7) erfolgt, und dass der Datenserver (15) über das Datennetz (14) und die Datenschnittstelle (11) Daten zum ausgewählten und durch die Steuereinheit (2) auszuwertenden Benutzerprofils (7) bereitstellt (104).

## Claims

1. Food processor (1) with at least one preparation vessel, with at least one control unit (2), at least one internal display device (3) and at least one data interface (11), wherein the preparation vessel has at least one heating device and at least one stirring device, wherein at least one user profile (7) can be evaluated with the control unit (2), wherein the control unit (2) at least activates and deactivates operating functions (8) based on the evaluation of the user profile (7), so that the operating functions (8, 8a) available for a user correspond to the evaluated user profile (7), and wherein a user menu (9) for the operation of at least one operating function (8) by a user can be displayed with the internal display device (3),
**characterized in that**
the user profile (7) to be evaluated by the control unit (2) is determined on the basis of the processing of at least one environmental parameter (10), that radio signals receivable by the food processor serve as environmental parameters (10), and that a user profile is determined on the basis of the criterion, whether at least one or more predefined radio networks and/or a short-range transmitter and/or a predefined smartphone is/are available, and/or **in that** the user profile (7) to be evaluated by the control unit (2) is determined by processing data (12) received from a data server via the data interface (11) which can be connected to a data network.

2. Food processor (1) according to claim 1,
**characterized in that**
the control unit (2) is set up in such a way that a user profile (7) can be adapted and/or a new user profile (7) can be created using data (12) received at the data interface (11).

3. Food processor (1) according to claim 1 or 2,
**characterized in that**
after switching on (101), at least one unique identification data element of the food processor (1) is provided at the data interface (11) for transmission via a data network (14) to at least one data server (15).

4. The food processor (1) according to any one of claims 1 to 3,
**characterized in that**
the user profile (7) to be evaluated by the control unit (2) is determined on the basis of the processing of at least one environmental parameter (10), that radio signals receivable by the food processor serve as environmental parameters (10), and that at least one radio signal of an electronic device received by the data interface (11), for example at least one available radio network and/or the presence of a predefined smartphone and/or a short-range transmitter, is/are evaluated as environmental parameter (10).

5. Food processor (1) according to claim 4,
**characterized in that**
geographical position data, such as air pressure, and/or acoustic data, such as ambient noise, can also be evaluated as environmental parameters.

6. The food processor (1) according to any one of claims 1 to 5,
**characterized in that**
the control unit (2) configures the food processor (1) by evaluating a user profile (7) in such a way that a time-controlled and/or program-controlled switch-off of the internal display device (3) is deactivated.

7. The food processor (1) according to any one of claims 1 to 6,
**characterized in that**
the control unit (2) configures the food processor (1) by evaluating a user profile (7) in such a way that identification information is provided at the data interface (11) for transmission to at least one data server (15), so that the food processor (1) can be identified at a data server (15).

8. The food processor (1) according to any one of claims 1 to 7,
**characterized in that**
the control unit (2) configures the food processor (1) by evaluating a user profile (7) in such a way that display information, which is displayed on the internal display device (3), is also provided at the data interface (11) for display on an external display device (16).

9. Food processor (1) according to claim 8,
**characterized in that**
the control unit (2) configures the food processor (1) by evaluating a user profile (7) in such a way that the display information provided for display on an external display device (16) is supplemented with additional graphical information based on a current state of the food processor (1), the operating behavior and/or user inputs, or is reduced by graphically minor information.

10. Food processor (1) according to claim 9,
**characterized in that**
the addition of the additional graphical information or the removal of the minor graphical information is triggered by a user touching the internal display device (3), in particular that the position of the additional information is determined by the position of the touch of the internal display device (3).

11. The food processor (1) according to any one of claims 1 to 10,
**characterized in that**
means for speech recognition are provided, in particular **in that** the control unit (2) configures the food processor (1) by evaluating a user profile (7) in such a way that the display information provided for display on an external display device (16) is supplemented with additional graphic information or reduced by minor graphic information, and **in that** the supplementing of the additional graphic information or reduction by minor graphic information is triggered by keywords recognized as part of speech recognition carried out.

12. Food processor (1) according to any one of claims 1 to 11,
**characterized in that**
the control unit (2) configures the food processor (1) by evaluating a user profile (7) in such a way that external display information can be received via the data interface (11) and displayed on the internal display device (3).

13. The food processor (1) according to any one of claims 1 to 12,
**characterized in that**
the control unit (2) configures the food processor (1) by evaluating a user profile (7) in such a way that external display information can be received via the data interface (11) and the external display information is made available again at the data interface (11) for display on an external display device (16) and/or **in that** the control unit (2) configures the food processor (1) by evaluating a user profile (7) in such a way that the reception and/or the transmission of instructions and/or messages, in particular e-mail or SMS, is set up via the data interface (11).

14. The food processor (1) according to any one of claims 1 to 13,
**characterized in that**
the control unit (2) configures the food processor (1) by evaluating a user profile (7) in such a way that the display of information, in particular a product catalog, product videos and/or news, stored in the food processor (1) or retrievable from a data server (15) via the data interface (11) and displayable on the internal display device (3) is activated.

15. Method (100) for operating a food processor (1) with at least one control unit (2) and at least one internal display device (3), wherein at least one user profile (7) can be evaluated with the control unit (2) at least for activation and for deactivation of operating functions (8), and wherein a user menu (9) for operation of at least one operating function (8) by a user can be displayed with the internal display device (3), in particular according to one of claims 1 to 14,
**characterized in that**
the user profile (7) to be evaluated by the control unit (2) is determined by processing data received via at least one data interface (11), **in that**, after the food processor (1) is switched on (101), at least one unique identification data element of the food processor (1) is transmitted (102) to at least one data server (15) via the data interface (11) and a data network (14), **in that** the data server (15) is configured in such a way that on the basis of the identification data element a selection (103) of a user profile (7) to be evaluated from a plurality of user profiles (7) is made, and **in that** the data server (15) provides (104) via the data network (14) and the data interface (11) data relating to the user profile (7) selected and to be evaluated by the control unit (2).

## Revendications

1. Robot ménager (1) avec au moins un récipient de préparation, avec au moins une unité de commande (2), au moins un dispositif d'affichage interne (3) et au moins une interface de données (11), le récipient de préparation présentant au moins un dispositif de chauffage et au moins un dispositif d'agitation, l'unité de commande (2) permettant d'évaluer au moins un profil d'utilisateur (7), l'unité de commande (2) activant et désactivant au moins des fonctions opérationnelles (8) sur la base de l'évaluation du profil d'utilisateur (7), de sorte que les fonctions opérationnelles (8, 8a) disponibles pour un utilisateur correspondent au profil d'utilisateur (7) évalué, et un menu d'utilisateur (9) pouvant être affiché par le dispositif d'affichage interne (3) pour permettre à un utilisateur d'utiliser au moins une fonction opérationnelle(8),
**caractérisé en ce que**
le profil d'utilisateur (7) à évaluer par l'unité de commande (2) est déterminé à l'aide du traitement d'au moins un paramètre d'environnement (10), **en ce que** des signaux radio pouvant être reçus par le robot ménager servent de paramètre d'environnement (10), et **en ce qu'**un profil d'utilisateur est déterminé à l'aide du critère si au moins un ou plusieurs réseaux radio prédéfinis et/ou un émetteur de proximité et/ou un smartphone prédéfini est/sont disponibles, et/ou **en ce que** le profil d'utilisateur (7) à évaluer par l'unité de commande (2) est déterminé par traitement de données (12) reçues d'un serveur de données par l'intermédiaire de l'interface de données (11) pouvant être reliée à un réseau de données.

2. Robot ménager (1) selon la revendication 1,
**caractérisé en ce que**
l'unité de commande (2) est configur de telle sorte que des données (12) reçues au niveau de l'interface de données (11) permettent d'adapter un profil d'utilisateur (7) et/ou de créer un nouveau profil d'utilisateur (7).

3. Robot ménager (1) selon la revendication 1 ou 2,
**caractérisé en ce que**
après la mise en marche (101), au moins un élément de données d'identification univoque du robot ménager (1) est mis à disposition sur l'interface de données (11) pour la transmission par un réseau de données (14) à au moins un serveur de données (15).

4. Robot ménager (1) selon l'une quelconque des revendications 1 à 3,
**caractérisé en ce que**
le profil d'utilisateur (7) à évaluer par l'unité de commande (2) est déterminé à l'aide du traitement d'au moins un paramètre d'environnement (10), **en ce que** des signaux radio pouvant être reçus par le robot ménager servent de paramètres d'environnement (10), et **en ce qu'**au moins un signal radio d'un appareil électronique reçu par l'interface de données (11), par exemple au moins un réseau radio disponible et/ou la présence d'un smartphone prédéfini et/ou un émetteur à courte portée, est/sont évalué(s) comme paramètre(s) d'environnement (10).

5. Robot ménager (1) selon la revendication 4,
**caractérisé en ce que**
des données de position géographique, par exemple la pression atmosphérique, et/ou des données acoustiques, par exemple les bruits ambiants, sont en outre évaluées en tant que paramètres environnementaux.

6. Robot ménager (1) selon l'une quelconque des revendications 1 à 5,
**caractérisé en ce que**
l'unité de commande (2) configure le robot ménager (1) par évaluation d'un profil d'utilisateur (7) de telle sorte qu'une mise hors service commandée par le temps et/ou par un programme du dispositif d'affichage interne (3) est désactivée.

7. Robot ménager (1) selon l'une quelconque des revendications 1 à 6,
**caractérisé en ce que**
l'unité de commande (2) configure le robot ménager (1) par l'évaluation d'un profil d'utilisateur (7) de telle sorte qu'une mise à disposition d'informations d'identification a lieu sur l'interface de données (11) pour la transmission à au moins un serveur de données (15), de sorte qu'une identification du robot ménager (1) peut avoir lieu sur un serveur de données (15).

8. Robot ménager (1) selon l'une quelconque des revendications 1 à 7,
**caractérisé en ce que**
l'unité de commande (2) configure le robot ménager (1) par évaluation d'un profil d'utilisateur (7) de telle sorte que des informations d'affichage qui sont représentées sur le dispositif d'affichage interne (3) sont également mises à disposition sur l'interface de données (11) pour l'affichage sur un dispositif d'affichage externe (16).

9. Robot ménager (1) selon la revendication 8,
**caractérisé en ce que**
l'unité de commande (2) configure le robot ménager (1) par évaluation d'un profil d'utilisateur (7) de telle sorte que les informations d'affichage qui sont mises à disposition pour l'affichage sur un dispositif d'affichage externe (16) sont complétées par des informations graphiques supplémentaires basées sur un état actuel du robot ménager (1), le comportement de commande et/ou des entrées d'utilisateur ou sont réduites par des informations graphiques mineures.

10. Robot ménager (1) selon la revendication 9,
**caractérisé en ce que**
le complément des informations graphiques supplémentaires ou la suppression des informations graphiques mineures est déclenché par un utilisateur en touchant le dispositif d'affichage interne (3), en particulier que la position des informations supplémentaires est fixée par la position du toucher du dispositif d'affichage interne (3).

11. Robot ménager (1) selon l'une quelconque des revendications 1 à 10,
**caractérisé en ce que**
des moyens de reconnaissance vocale sont prévus, en particulier **en ce que** l'unité de commande (2), par évaluation d'un profil d'utilisateur (7), configure le robot ménager (1) de telle sorte que les informations d'affichage, qui sont mises à disposition pour l'affichage sur un dispositif d'affichage externe (16), sont complétées par des informations graphiques supplémentaires ou réduites par des informations graphiques minoritaires, et **en ce que** le complément des informations graphiques supplémentaires ou la réduction par des informations graphiques minoritaires est déclenché par des mots clés reconnus dans le cadre d'une reconnaissance vocale effectuée.

12. Robot ménager (1) selon l'une quelconque des revendications 1 à 11,
**caractérisé en ce que**
l'unité de commande (2) configure le robot ménager (1) par évaluation d'un profil d'utilisateur (7) de telle sorte que des informations d'affichage externes peuvent être reçues par l'intermédiaire de l'interface de données (11) et représentées sur le dispositif d'affichage interne (3).

13. Robot ménager (1) selon l'une quelconque des revendications 1 à 12,
**caractérisé en ce que**
l'unité de commande (2) configure le robot ménager (1) par évaluation d'un profil d'utilisateur (7) de telle sorte que des informations d'affichage externes puissent être reçues par l'intermédiaire de l'interface de données (11) et que les informations d'affichage externes soient à nouveau mises à disposition sur l'interface de données (11) pour l'affichage sur un dispositif d'affichage externe (16) et/ou que l'unité de commande (2) configure le robot ménager (1) par évaluation d'un profil d'utilisateur (7) de telle sorte que la réception et/ou l'envoi d'indications et/ou de messages, en particulier de courriels ou de SMS, soient configurés par l'intermédiaire de l'interface de données (11).

14. Robot ménager (1) selon l'une quelconque des revendications 1 à 13,
**caractérisé en ce que**
l'unité de commande (2) configure le robot ménager (1) par évaluation d'un profil d'utilisateur (7) de telle sorte que l'affichage d'informations, en particulier un catalogue de produits, des vidéos de produits et/ou des messages, pouvant être affichées sur des informations mémorisées dans le robot ménager (1) ou pouvant être appelées par l'interface de données (11) d'un serveur de données (15) et pouvant être représentées sur le dispositif d'affichage interne (3), est activé.

15. Procédé (100) de fonctionnement d'un robot ménager (1) comportant au moins une unité de commande (2) et au moins un dispositif d'affichage interne (3), l'unité de commande (2) permettant d'évaluer au moins un profil d'utilisateur (7) au moins pour l'activation et la désactivation de fonctions opérationnelles(8), et le dispositif d'affichage interne (3) permettant de représenter un menu d'utilisateur (9) pour la commande d'au moins une fonction opérationnnelle (8) par un utilisateur, notamment selon l'une des revendications 1 à 14,
**caractérisé en ce que**
le profil d'utilisateur (7) à évaluer par l'unité de commande (2) est déterminé par traitement de données reçues par l'intermédiaire d'au moins une interface de données (11), **en ce qu'**après la mise en marche (101) du robot ménager (1), au moins un élément de données d'identification univoque du robot ménager (1) est transmis (102) à au moins un serveur de données (15) par l'intermédiaire de l'interface de données (11) et d'un réseau de données (14), **en ce que** le serveur de données (15) est configuré de telle sorte qu'une sélection (103) d'un profil d'utilisateur (7) à évaluer parmi une pluralité de profils d'utilisateur (7) s'effectue à l'aide de l'élément de données d'identification, et **en ce que** le serveur de données (15) met à disposition (104), par l'intermédiaire du réseau de données (14) et l'interface de données (11), des données relatives au profil d'utilisateur (7) sélectionné et à évaluer par l'unité de commande (2).
